# EUROPEAN PATENT APPLICATION

(11) **EP 1 176 522 A2**
(43) Date of publication of application: **30.01.2002**
(21) Application number: 01306344.1
(22) Date of filing: 24.07.2001
(51) Int. Cl.: G06F 17/30

(54) **Information distribution service system**

(30) Priority: 25.07.2000 JP 2000223953; 26.06.2001 JP 2001193019; 05.07.2001 JP 2001204261
(71) Applicant: Noss Corporation, Tokyo (JP)
(72) Inventor: Aoi, Hideaki, Adachi-ku. Tokyo (JP); Sando, Masayuki, Toshima-ku. Tokyo (JP)
(74) Representative: Brookes Batchellor

(57) **Abstract**

A service system body 2 uses a Cookie to recognize each visitor at a site to thereby collect information reference tendencies of the visitor at the site through filter processing provided on an HTTPD so that when returning a response to a service, it may automatically superpose, on this response, additive information prepared beforehand which can be decided to be valid based on the reference tendency. The HTTPD3 is provided with a filter portion 3A for extracting information reference tendencies. The reference tendencies extracted at the filter portion 3A are collected by a server portion 4 and saved in a memory 5. A service information memory 6 saves therein the additive information which can be decided to be valid based on the reference tendencies. A network routing service in information distribution is also included.

## Description

### BACKGROUND OF THE INVENTION

### 1. Field of the Invention

The invention relates to a service system for distributing information to a user who has visited a Web site in the internet.

### 2. Description of the Related Art

WWW (World Wide Web) permits a user to go along a hyper-link to thereby view the information of characters or images called a Web page disclosed in the internet.

Services for the users who is visiting a Web site are given by a variety of service functions provided mainly for the users such as retrieving of Web sites, registering of their favorite pages, storing of retrieval history pages, and saving and printing of acquired characters or images.

The establisher of those Web pages, however, only provides the information the one prepared beforehand and so cannot always provide information desired by users, thus often giving them different information from that are desired.

This is because the establisher tries to provide users with such information that satisfies only one average idea among variety of ideas they have, therefore users cannot get satisfactory information. Accordingly, the users must get their desired information by taking labor and time to visit various Web pages.

### SUMMARY OF THE INVENTION

In view of the above, it is an object of the invention to provide an information distribution service system which permits a Web site side to predict information that matches an idea of an individual user and provide it to the person.

Then, an information distribution service system at the Web side permits the information originator to perform network routing each time a receiver is certified to thereby utilize a single-cast or multi-cast communication function of a network router for distribution desired information, however, it may be difficult to carry out certificate management or PPV concept account management i receivers change frequently. Also, a like problem occurs when the audience rating is acquired in business.

The object of the invention is to provide such an information distribution service system that secures and facilitates at a Web site the certificate management, the PPV-concept account management, the audience rating acquisition, etc. in information distribution.

Next, there have been so far provided off-line methods such as wayside surveys, OTC(over-the-counter) surveys or the like and on-line methods such as questionnaire surveys by use of telephones, the Internet or the like in order to grasp the market situations or tendencies of goods or products. In such type of methods, a survey is conducted on the basis of a predetermined period to collect and summarize itemized answers (information) after the passage of said period, analyze the collected answers for each item to obtain market situations or tendencies with the result that there are not a few portions (due to time lags) which fail to reflect the real time market situations.

The object of the present invention is to provide a information distribution service system which is capable of timely knowing the market situations or tendencies.

The invention is characterized by the following service system, by which based on reference tendencies of individual users in a Web site they have visited, their interested/attention attracting information is automatically recognized, which is then also distributed to them automatically:
(1) An information distribution service system for a user who visits a Web site in the internet comprising:
   means for knowing information reference tendencies of an individual user at a Web site which the one has visited; and
   means for distributing to the user the individual information related to evaluation of the above-mentioned reference tendencies.
(2) The knowing of the above-mentioned reference tendencies is characterized in that in each access made to each information piece retrieved by the user, reference values for reference recording are prepared and combined with each other to thereby digitize the tendencies of the user's interests and then obtained as a reference tendency in decision rule processing prepared beforehand arbitrarily.
(3) The above-mentioned individual information and distribution is characterized in that both the Proxy and filter concepts are used, thus being alienated in relationship from individual services at the Web site.
   Also, the invention is characterized by the following configuration, in which in distribution of information, an intelligent router is provided in place of the conventional network router or for each terminal so that it may be interlocked with an external certification system to thereby perform gate management for each individual IP address or for each individual for each connection destination address and also interlocked with an external session management system to thereby perform session management in session log acquisition for each individual IP address as against an upper gate, that gate management data for each router may be set up in a relay format, and that such an enciphering mechanism may be provided that uses an elastic surface wave element as its enciphering device or deciphering device:
(4) An information distribution service system for distributing information to a user who has visited a Web site in the internet to then perform information distribution routing based on the user's certificate is characterized by comprising:
   an intelligent router which is provided for each network router or user terminal, in which IP addresses of the information distribution source and the user terminal are registered beforehand, and which has a gate management table comprised of setting gates for deciding permission/refusal of information distribution between their respective addresses; and
   a certification server for certifying distribution of information from an information distribution source to a user and, when the user's terminal is certified, opening a setting gate in the above-mentioned gate management table to thereby permit the information distribution.
(5) An information distribution service system for distributing information to a user who has visited a Web site in the internet to then perform information distribution routing based on the user's certificate is characterized by comprising:
   an intelligent router which is provided for each user terminal, in which IP addresses of the information distribution source and the user terminal are registered beforehand, and which has a gate management table comprised of setting gates for user IDs; and
   a certification server for certifying distribution of information from an information distribution source to a user and, when the user's terminal is certified, registering the user ID at a setting gate in the above-mentioned gate management table to thereby permit the information distribution.
(6) The above-mentioned intelligent router is characterized by comprising means for registering for each connection terminal/certified user a communication session log passing therethrough to thereby deliver the log to an external session management mechanism in response to its request.
(7) The above-mentioned intelligent router is characterized by comprising means for determining a master router of a plurality of sibling intelligent routers in registration of the IP addresses of an information distribution source and a user terminal and the user IDs so that when registration data of any one of these sibling intelligent router is set up in this master router, that registration data may be transferred to the other sibling intelligent routers in a relay format in such a manner that the intelligent router to which that data has been transferred may set its own registration data subsequently.
(8) The system is characterized by a configuration in which the above-mentioned intelligent router, certification server, or information distribution source is mounted with an enciphering device having an elastic surface wave element configuration so that communication information passing therethrough may be partially or entirely undergo deflection processing by use of a deflection code and the relevant deciphering processing to thereby protect the routing mechanism and the distribution information.
   In order to know the market situations or tendencies, the present invention is characterized in that users who have visited a Web site are marked such that the information reference tendency or the simple questionnaire response tendency of said visitors (virtual individuals on the net) are kept on being collected to process virtual characters out of said marked visitors (in the form of a kind of virtual intention having a predetermined consciousness model as an evaluation function) for knowing the consciousness tendency shown by the individual virtual characters as a market consciousness; thus, the invention also has a configuration as follows:
(9) The information distribution service system which distributes information to users who have visited an Internet Web site is characterized in that a number of users are marked such that the information reference tendency or the simple questionnaire response tendency of said visitors (virtual individuals on the net) are kept on being collected to process virtual characters out of said marked visitors (in the form of a kind of virtual intentions having a predetermined consciousness model as an evaluation function) for knowing the consciousness tendency shown by the individual virtual characters as a market consciousness.
(10) The system is also characterized in having a means for correcting the consciousness tendency formed out of said virtual character on the basis of the consciousness tendency of an existing character.
(11) Further, it is characterized in having a means for correcting said evaluation function in the event that there is a wide discrepancy between a market consciousness predicted from said virtual characters and a market consciousness of an existing characters.

### BRIEF DESCRIPTION OF THE DRAWINGS

FIG. 1 is a system configuration diagram for showing a first embodiment of the invention;
FIG. 2 is an illustration for showing processing for specifying a user in the first embodiment;
FIG. 3 is an illustration for showing processing for knowing reference tendencies in the first embodiment;
FIG. 4 is an illustration for showing information distribution processing for reference tendencies in the first embodiment;
FIG. 5 is an illustration for showing a Proxy concept for acquisition of individual information in the first embodiment;
FIG. 6 is an illustration for showing a filter concept for acquisition of individual information in the first embodiment;
FIG. 7 is an illustration for showing an example of applying intelligent routers in a second embodiment of the invention;
FIG. 8 is an illustration for showing an another example of applying intelligent routers in the second embodiment of the invention;
FIG. 9 is an illustration for showing a system configuration diagram for network routing in the second embodiment;
FIG. 10 is a continued illustration for showing the system configuration diagram for network routing in the second embodiment;
Fig. 11 is an illustration for showing a session management mechanism in the second embodiment;
FIG. 12 is an illustration for showing a set-up mechanism in the second embodiment;
FIG. 13 is an illustration for showing a system configuration diagram of an enciphering device by an elastic surface wave element in the second embodiment;
FIG. 14 is an example of applying an enciphering device in the second embodiment;
FIG 15 is an illustration for showing a relationship between a set-up and an encipher synchronization signal in the second embodiment; and
Fig. 16 is a block diagram which shows the third embodiment of the invention.

### DESCRIPTION OF THE PREFERRED EMBODIMENTS

### (First Embodiment)

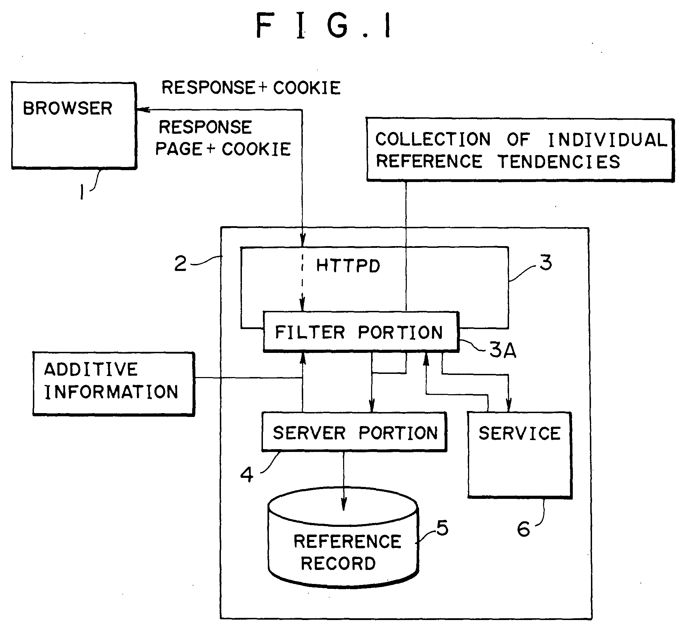

FIG. 1 is a system configuration diagram for showing an embodiment of the invention, in which each of the portions is implemented by a software component. Browser 1 supports a cookie (Cookie) function, by which an information provider can save a user ID, an access history, etc. at a user terminal so that the user may reference thus saved information.

A service system body 2 can use a Cookie to recognize an individual site visitor to thereby collect information reference tendencies of individual visitors at a site which they have visited by using filter processing prepared on an HTTPD so that when returning a service response, additive information prepared beforehand which is decided to be valid based on the reference tendencies may be returned as superposed on the response automatically.

For this purpose, the service system body 2 provides an HTTPD3 with a filter portion 3A for extracting information reference tendencies, in addition to a program for processing the HTTP protocol for transferring documents and a variety of types of multi-media information.

In this extraction of information reference tendencies, specifically, for each access to each information piece retrieved by a user (visitor) using a hyper-link etc., reference values for reference recording are prepared and combined to thereby digitize tendencies in which the user is interested, which are then obtained as reference tendencies in decision rule processing prepared beforehand arbitrarily.

The reference tendencies extracted at the filter portion 3A are collected by a server portion 4 and saved in a memory 5 as a reference record. In a service information memory 6 is saved additive information decided to be valid based on the reference tendencies. This additive information includes, for example, CM banners, product information, and all other items that can be addressed in mailing and transmitted by the HTTP protocol and be selectively displayed either by being added to a Web response page or being indicated in a different window.

By the present embodiment, therefore, based on reference tendencies of individual users at a Web site they have visited, their interested/attention attracting information can be automatically recognized to be then automatically distributed as superposed to the users. The following will detail the processing for each of the functions.

### (1) Extraction of reference tendencies

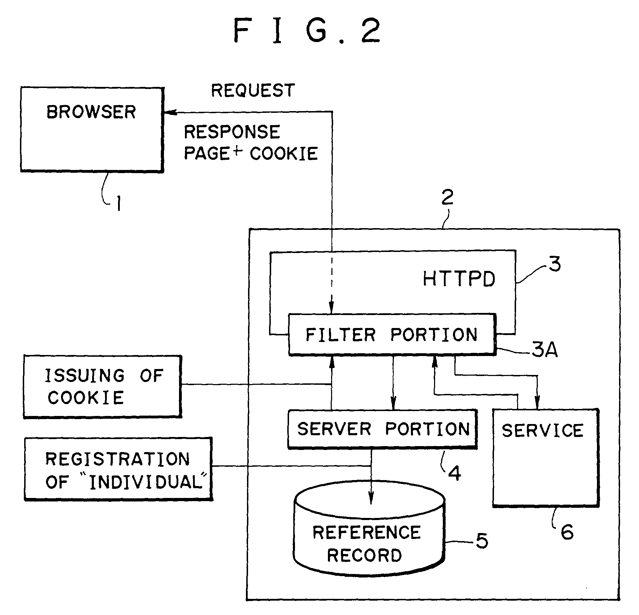

An individual user who is currently accessing is specified using a permanent Cookie issued in the name of a service site to thereby know one's reference tendency. To do so, as shown in FIG. 2, each access from the user is beforehand registered for each "user" in the memory 5 when the server portion 4 issues a Cookie.

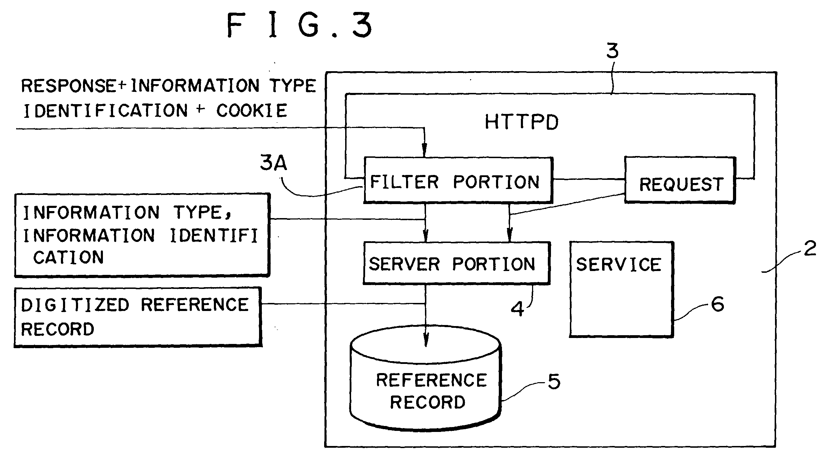

To know the reference tendency of each user, as shown in FIG. 3, to a hyper-link for information predetermined to be sampled, an "information type" and an "information identification" which indicate that information are set to thereby record accesses to the information to be sampled.

For reference recording of information to be sampled, an "information type" and an "information identification" which indicate that information are digitized and recorded and saved for each user so that one's reference tendency may be known based on the saved reference pattern.

Also, for transforming the saved reference record to a referenced tendency, a reference rule and pattern are specifically transformed using a rule directly correlated to the information to be referenced.

Also, restrictions on application of the above-mentioned two rules can be preset in such a manner that either one or both of them may be applied.

The rules are to be set so as to perform three types of evaluation of (a) directly correlating to what is to be referenced, (b) correlating to a reference pattern, and (c) correlating also a time series to be evaluated in this processing (b).

Also, the above rules of (a), (b), and (c) can be selected in application in any combinations, e.g. any one of these rules, rules (a) and (b), rules (a) and (c), etc.

The rules can be created as a rule class using such a programming language as Java or C++.

### (2) User-specific information distribution for reference tendency

Based on a reference tendency evaluating rule specified in the above-mentioned reference tendency extraction, such individual information is distributed that is correlated to a reference tendency evaluation result for each user.

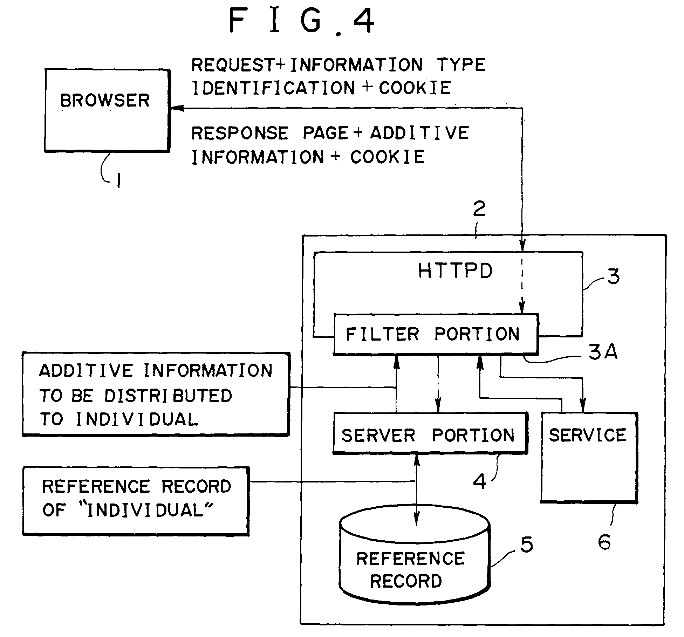

This information distribution operation involves, as shown in FIG. 4, causing the server portion 4 to read out an individual's reference record from the memory 5 to contain additive information in the information to be distributed individually.

In this case, how to distribute the individual information is to be specified using an extended tag coded in HTML for each unit of the information, coming in selectively (a) displaying an information referencing destination in a banner at a specified position in a response page, (b) directly inserting the information at a specified position in a response page, (c) directly displaying information in another window, or (d) distributing information in an e-mail.

### (3) Acquisition of individual information

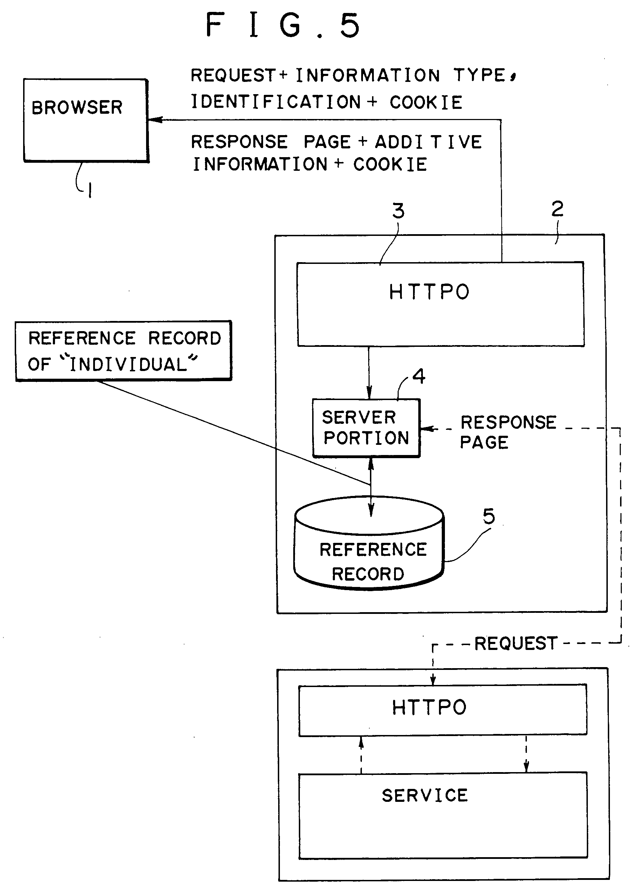

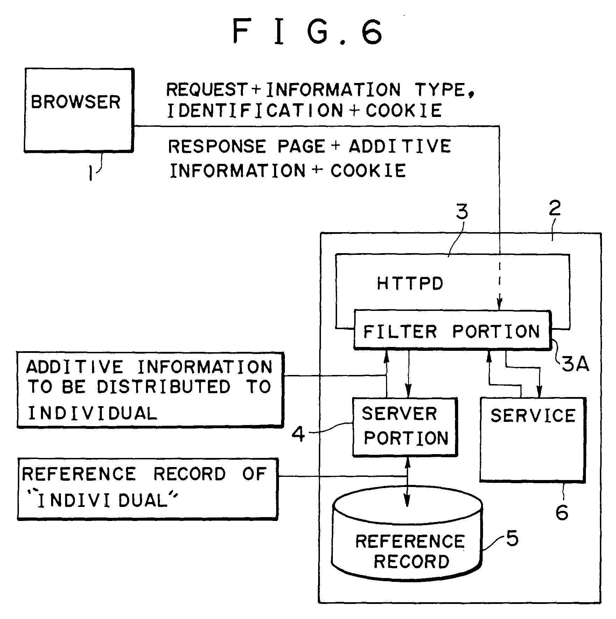

To acquire individual information (that is, information type, information identification, Cookie correlated to an information reference request), as shown in FIGS. 5 and 6, both the Proxy and filter concepts are to be used to thereby alienate this service from an individual service at a service site using this system.

By the Proxy concept shown in FIG. 5, any information once acquired is stored in a cache memory of the server portion 4 so that the same information, when desired, is acquired from that cache memory.

The filter concept shown in FIG. 6 uses a filter extending function supported at a Web server of Netscape or Microsoft to thereby provide the Web server with an interface between collection and distribution of the information.

### (4) Distribution of individual information

The individual information is to be distributed using both the Proxy and filter concepts, like in the above-mentioned individual information acquisition, to thereby alienate this service from an individual service of a service site using this system.

### (Second Embodiment)

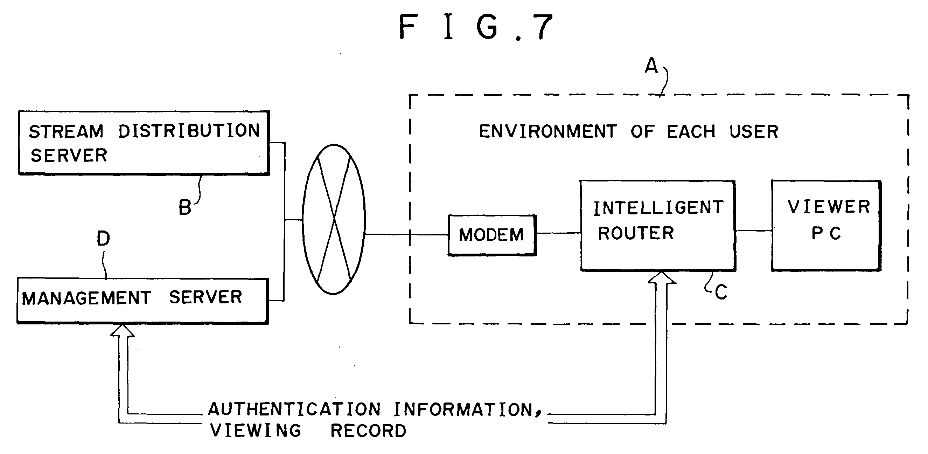

In network routing in an information distribution service system according to the invention, as shown in FIG. 7 for a case where the rule is applied to a stream distribution business, for example when a user A receives at a stream distribution server B a stream distribution service in a multi-cast communication using the internet, the user A is provided with an intelligent router C so that when a management server D has certified the user A, an gate of the intelligent router C may be opened to thereby enable stream distribution and account management by the user A. Also, the management server D enables acquisition of the audience rating based on a viewing record of the intelligent router C.

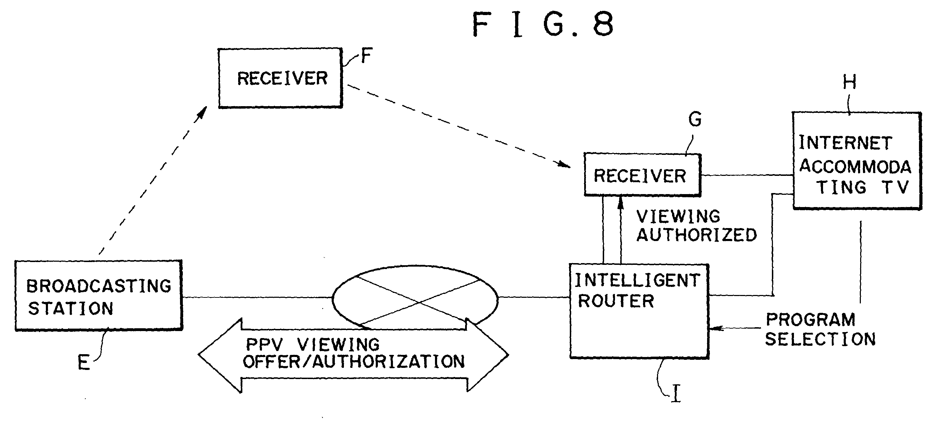

Also, as shown in FIG. 8 in which the rule is applied to a broadcasting satellite, to receive some contents from a broadcasting station E via a broadcasting station F to a receiver G of a receiver person over a satellite to view them on an internet accommodating television H, the receiver person side is provided with an intelligent router I to thereby obtain PPV viewing offer/permission at the broadcasting station over the internet from the intelligent router I, thus enabling chargeable reception (account management) of the receiver G by thus obtained viewing permission. Further, audience rating acquisition is enabled at the broadcasting station E side based on program selection of the receiver person.

Note here that the information distribution operation is performed almost the same way as in the case of a cable or wireless a transmitter-receiver, not to say of a case by a broadcasting satellite.

The following will detail certificate management, account management, viewing management, etc. by an intelligent router in this embodiment.

### (1) Gate management mechanism

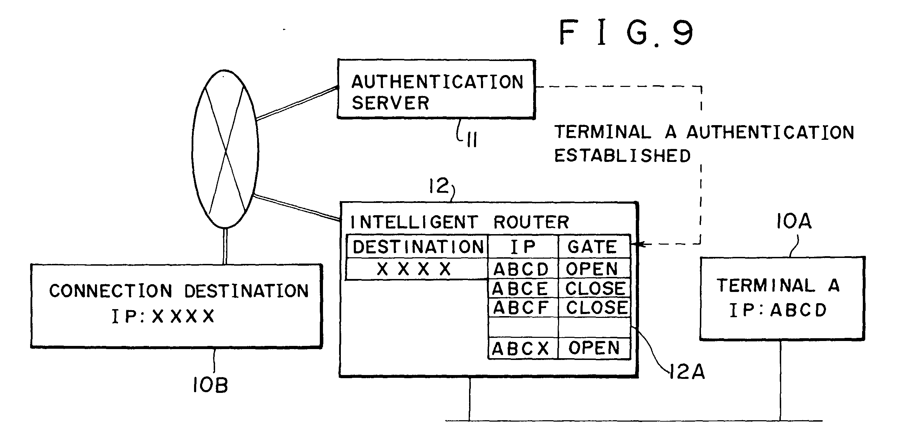

FIG. 9 shows a system configuration for network routing, in which the system is interlocked with an external certification system to thereby manage a gate (information distribution permission/refusal deciding gate) for each individual IP address for each connection destination address.

In the system configuration shown in FIG. 9, a certification server 11 is provided as a centralized management portion for network routing, thus proving a common certificate management means to which a request is sent from a plurality of information originators such as an information distribution service system.

An intelligent router 12 is, in place of a prior art network router, provided on a network or for each user terminal. The intelligent router 12 beforehand registers therein a gate management table 12A having therein as data the connection destination addresses and terminal IP addresses and the gate opening/closing flag.

In this configuration, when a terminal 10A received an information distribution service over the internet etc. from a connection destination 10B, which provides an information distribution source, gate management is performed for each terminal.

To permit distribution of information from the connection destination 10B to the terminal 10A, the certification server 11 switches a gate at a relevant position in the gate management table 12A to OPEN when the terminal 10A is certified. As shown in the figure, only the gate of IP:ABCD at the terminal 10A corresponding to IP:XXXX of the connection destination 10B is switched to "OPEN", leaving the other terminals such as "ABCD" in a "CLOSE" state.

If implicitly intended to do so through the certification server 11, the gate is actually closed when a certain lapse of time has elapsed after a session was started and then another certain lapse of time has elapsed after communication stopped at this session.

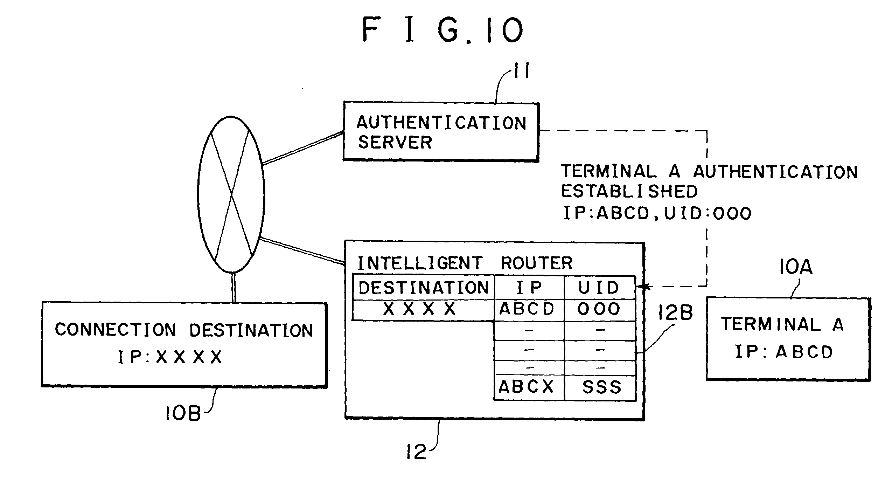

FIG. 10 shows a case of gate management for each individual. The intelligent router 12 has a gate management table 12B having therein the terminal IP addresses for each connection destination address and the user ID setting gate for each individual to thereby register a user ID of a terminal certified by the certification server 11 at a setting gate of that table 12B, thus realizing gate management for each individual. In this case, the certification can be cancelled by the same way as in the case of gate closing in FIG. 9.

Therefore, certificates can be simply managed by use of the gate management tables 12A and 12B provided to the intelligent router 12. For example, if the terminal 10A acts as a user terminal of the information distribution service system and the connection destination 10B acts as an information origination source, by providing the intelligent router 12 as a router of the user terminal 10A, information can be received when the certification server 11 certifies the terminal. In this case, to manage certificates at the connection destination 10B, it is necessary only to transfer certification data pieces integrated at each terminal to the certification server 11 and subsequently transfer certification verification data thereto.

### (2) Session management mechanism

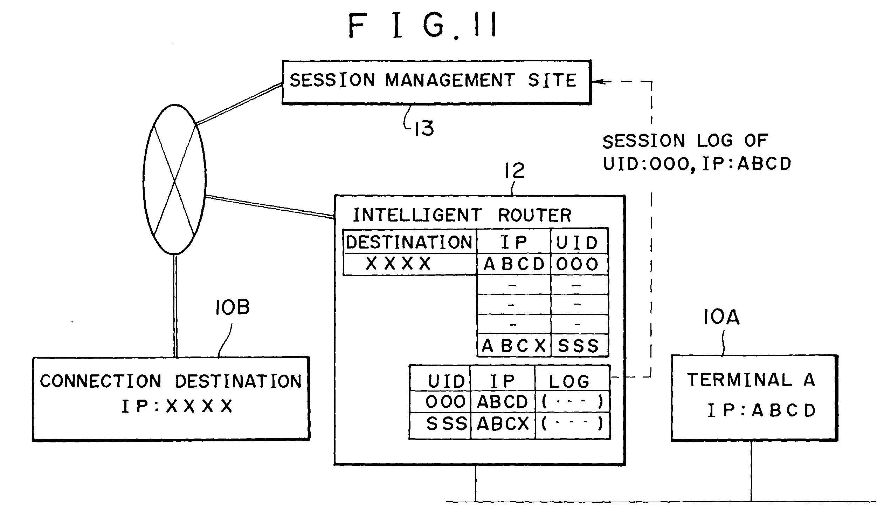

FIG. 11 shows a system configuration for network routing provided with a session management mechanism, in which the system is interlocked with an external session management (account management and viewing management) system to thereby record session logs of communication contents passing through the intelligent router for each connected terminal/certified user so that these logs may be delivered in session management in response to a request from the external session management mechanism.

Session management over the internet enables identification and integration for each user in conversational communication accompanied by transferring of many requests/responses.

At a session management site 13 having such a function, the intelligent router 12 registers session logs for each connected terminal/certified user to thus deliver those session logs to the session management site 13.

This permits session management site 13 to securely perform account management and viewing management at, e.g. the connection destination 10B, which provides an origination source of the information distribution service system.

### (3) Remote set-up mechanism

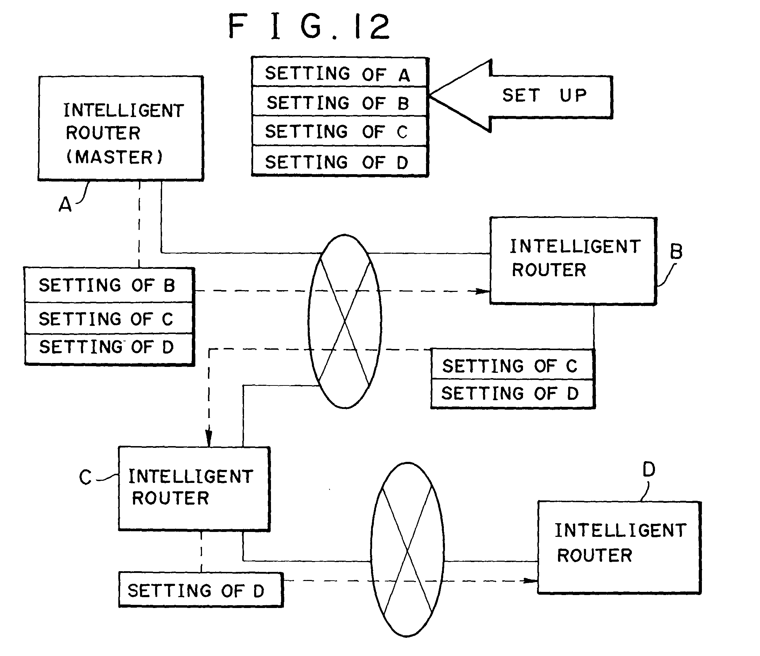

FIG. 12 shows a system configuration for network routing provided with a remote set-up mechanism, in which each set-up operation for the intelligent router is performed remotely.

The intelligent router 12 shown in FIG. 9 or 10 needs to beforehand register the gate management tables 12A and 12B thereat. A set-up operation such as such table data registration is performed for each terminal individually and so requires a great deal of time and labor.

To guard against it, as shown in FIG. 12, one of the intelligent routers A, B, C and D at each terminal is specified as a master router (router A is specified as the master router in the figure) so that the data of the gate management tables 12A and 12B may be set up at that master router A.

This causes the master router A to internally set the gate management tables and also transfer the set-up data as developed in a relay format to the other terminals described in the gate management tables.

As this transmission destination, actually a sibling intelligent router which is the nearest of a plurality of terminals described in the gate management tables is specified. In FIG. 12, the router A specifies setting of the routers B, C, and D to transfer the data to the router B, which in turn specifies setting of the routers C and D to transfer the data to the router C, which finally specifies setting of the router D to transfer the data thereto.

Since this processing is routing management, contents required by each router basically differ, so that the setting operation and the transferring operation themselves contain redundancy. Specifically, the settings of all the routers are temporarily stored at the master router A, so that at the time of development in a relay format the information of the setting of one's own of the routers is delivered to the next router.

Therefore, the data set-up operation of the gate management table involves only transferring to the master router the information including the set data of the other sibling routers, thus greatly reducing the time-wise and quantity-wise loads of the information to be processed when such data setting operations are performed that have many similarities at many sibling terminals.

### (4) Enciphering mechanism using elastic surface wave element

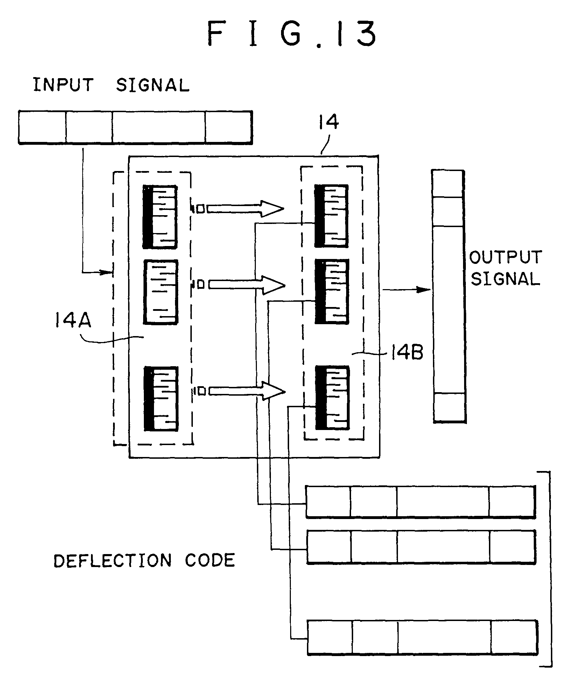

FIG. 13 shows an enciphering mechanism using an elastic surface wave element in network routing as an enciphering or deciphering device, in which a piezoelectric effect by the elastic surface wave element related with the external certification system may protect the routing mechanism and the information to be distributed.

The elastic surface wave element has one pair of cord-shaped electrodes formed on its crystal substrate, whereby when an electric signal is applied to one of this pair of cord-shaped electrodes, the piezoelectric effect of the crystal substrate causes this electrode to generate an elastic surface wave over the crystal substrate, which wave is then propagated to the other cord-shaped electrode to be obtained there as an electric signal. In this generation and propagation of an elastic surface wave, it is possible to provide a filter function or a modulation function utilizing a difference in pattern or pitch of the cord-shaped electrodes.

An enciphering device 14 shown in FIG. 13 has the above-mentioned elastic surface wave element configuration which comprises cord-shaped electrode portion 14A which matches the number of bits of a digital input signal and another cord-shaped electrode portion 14B having its component electrodes provided as facing in position their counterparts of the electrode portion 14A respectively so that an elastic surface wave signal propagated from the electrode portion 14A may be phase-modulated by use of a deflection code and then obtained at the portion 14B as a deflected output signal.

The above-mentioned cord-shaped electrode portion 14A is configured as a passive one so as to receive a multiple-bit input signal as an elastic surface wave having a predetermined frequency and a predetermined phase for each of the bits. The cord-shaped electrode portion 14B, on the other hand, is configured as an active one in order to deflect an input signal using a deflection code set for each of the bits.

Therefore, the enciphering device 14 can obtain an output signal given by enciphering an input signal with a deflection code. The input signal can be decrypted from the output signal by providing such a deciphering device that has an element configuration equivalent to that of the enciphering device 14 for applying the same deflection code. In this case, the deflection code acts as a key code for both enciphering code and deciphering.

Thus, in an information distribution service system using the internet etc., by selecting various application forms such as mounting an decrypting device of an elastic surface wave element configuration to the intelligent router shown in FIGS. 9-12 or providing a certification server or information distribution source with the enciphering device 14, the routing mechanism and the information to be distributed can be protected securely and easily.

In a specific application form, two-mode system is provided comprising one mode in which the enciphering device is used in any communication through the intelligent router and the other in which it is used in communication with a specific destination as interlocked with gate management.

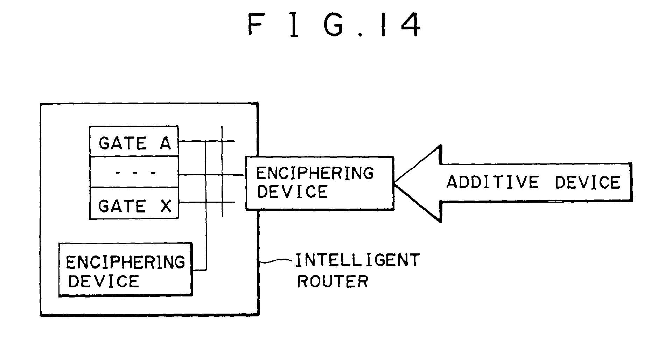

Also, when the system is used for each gate, two application forms are prepared: one in which it is interlocked with the certification mechanism for each individual terminal and the other in which it is used in any communication through the gate. In the case of interlocking with the certification mechanism, when a terminal is certified, communication from its terminal is to be connected to the enciphering device. In the case of application to any communication, an enciphering device equipped to the intelligent router on a standard basis is used, while in the case of application for each gate, as shown in FIG. 14, an enciphering device of a high-order digit bit is added as required.

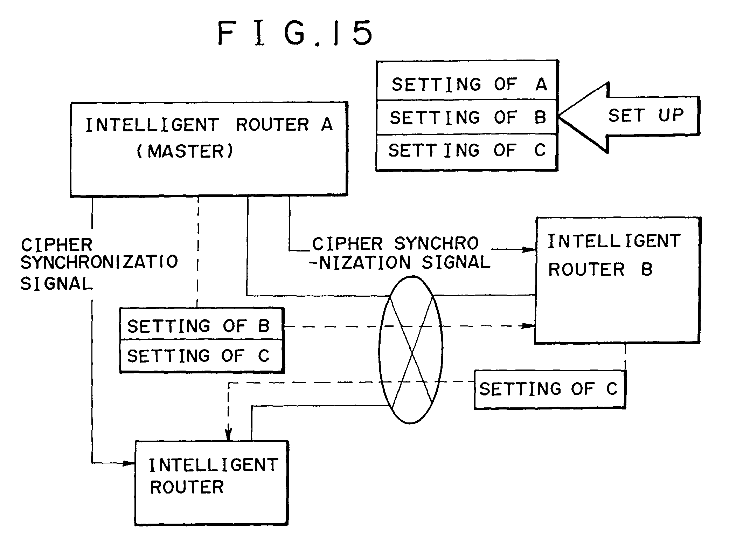

Also, in a case of application to automatic set communication of sibling routers by use of the above-mentioned relay format remote set-up mechanism, as shown in FIG. 15, communication is to be always performed through an enciphering device using a deflection code which is determined as an enciphering signal among the siblings beforehand.

### (Third Embodiment)

In the information distribution service system according to the present invention, a piece of information which is/can be interesting to individual users is automatically recognized from the reference tendency of individual users visiting the Web site such that an automatic distribution service system containing such piece of information is conducted.

In this embodiment, a number of users visiting a Web site are used to continuously collect the information reference tendencies or questionnaire response tendencies of such users at the site, processing virtual characters out of such visitors and know the consciousness tendencies shown by individual virtual characters as a market consciousness.

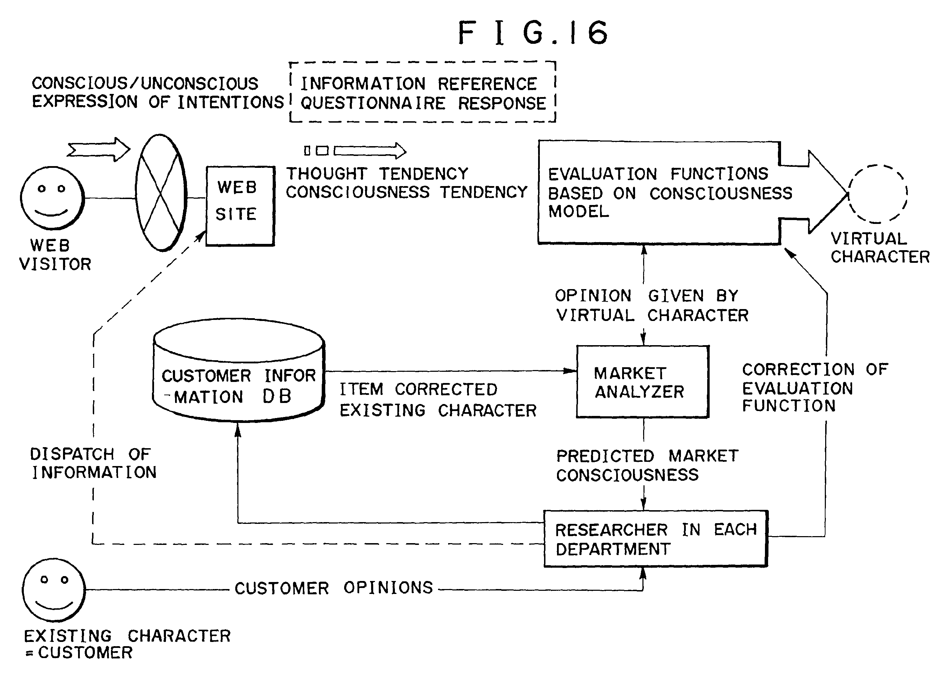

Fig. 16 is a block diagram of this embodiment. The market researcher 21 of each department summarize answers (information) of the clients (existing characters) item by item by off-line methods such as conventionally done wayside or OTC (over-the-counter) surveys or on-line method such as questionnaire surveys by use of telephones or the Internet to accommodate the same into the client information database 22.

The Web site 23 is accessed by a number of visitors and if their information reverences or the goods or products concerning which the visitors answer to the questionnaire are targets to be surveyed by the market researcher 21, relevant information is issued from the market research portion 21 to the Web site 23.

The Web site 23 continues to collect the information reference tendencies of the visitors or their answers to the questionnaire concerning such information as information concerning their conscious or unconscious expression of intensions. Said information is transferred to the virtual character processor 24 as the visitors' thought tendency information and conscious tendency information.

Said virtual character processor 24 has evaluation functions based on the consciousness models and acts to process the visitors in the form of virtual characters by treating their thought tendency information and consciousness tendency information as evaluation function inputs.

The market analyzer 25 analyzes the consciousness tendency shown by the individual characters evaluated by the processor 24, thereby to convey predicted market situations and tendencies to the market researcher 21.

Therefore, a number of visitors to the Web site are processed into virtual characters, on the basis of which the market consciousness is analyzed to obtain survey results reflecting the real time market situation.

During the analyzing operation, the market analyzer 25 improves the accuracy of the market analysis even more by making corrections on the basis of the consciousness tendency of the existing characters stored in the database 22. Further, if there is a wide discrepancy between the predicted market consciousness and the market consciousness of the existing characters, the market analysis is made to have a learning ability by correcting the evaluation function of the processor 24.

### (Effect of the invention)

Thus, by the invention, based on a reference tendency of each user at a Web side at which he has visited, his own interested/attention attracting information can be automatically recognized and distributed as superposed to him, thus permitting the Web site to predict information that matches his idea and provide it to him.

For example, the invention can contribute to effective and active product introduction at, e.g. an e-commerce site in the internet.

Also, by the invention, an intelligent router is provided for each network router or terminal so that it may be interlocked with an external certifying system to perform gate management for each individual IP address or an individual for each connection destination address, that it may be interlocked with an external session management system to perform session management in acquisition of session logs for each individual IP address for an upper gate, that gate management data for each router may be set up in a relay format, and that an enciphering mechanism is provided which uses an elastic surface wave element as an enciphering or deciphering device, thus securing and facilitating the certificate management, the PPV concept account management, the audience rating acquisition, etc. in the information distribution service system.

Further, the present invention makes it possible to timely know the market situation and tendency by marking users visiting the Web site to continuously collect their information reference tendency at the site and their response tendency to the simple questionnaire and process the marked visitors into virtual characters such that the consciousness tendency shown by the individual characters are known as the market consciousness.

## Claims

1. An information distribution service system for a user which has visited a Web site in the internet, comprising:
means for knowing an information reference tendency of the user at the site which the user has visited; and
means for distributing to the user individual information correlated to evaluation of the reference tendency.

2. The information distribution service system according to claim 1, wherein the knowing of the reference tendency involves preparing reference values for reference recording for an access to each information item retrieved by the user and combining the reference values to thereby digitize a user's interest tendency and obtain the tendency as a reference through decision rule processing prepared beforehand arbitrarily.

3. The information distribution service system according to claim 1, wherein a distribution service of the individual information item is alienated from each service at a Web site using both a Proxy concept and a filter concept.

4. An information service system for distributing information to a user who has visited a Web site in the internet to then perform routing of information distribution when the user is certified, comprising:
an intelligent router which is provided for each network router or user terminal, to which is registered an IP address of an information distribution source and a user terminal beforehand, and which has a gate management table comprised of a setting gate for deciding permission/refusal of distribution of information between the IP address of the information distribution source and the IP address of the user terminal; and
a certification server for certifying information distribution from an information distribution source to a user to thereby open the setting gate of the gate management table when the user's terminal is certified, thus enabling information to be distributed.

5. An information service system for distributing information to a user who has visited a Web site in the internet to then perform routing of information distribution when the user is certified, comprising:
an intelligent router which is provided for each user terminal, to which is registered an IP address of an information distribution source and a user terminal beforehand, and which has a gate management table comprised of a setting gate for a user ID; and
a certification server for certifying information distribution from an information distribution source to a user to thereby register a user ID at the setting gate of the gate management table when the user's terminal is certified, thus enabling information to be distributed.

6. The information distribution service system according to claim 4 or 5, wherein the intelligent router is provided with means for recording a session log of communication through the intelligent router for each connected terminal/certified user to thereby deliver the session log to an external session management mechanism in response to a request of the external session management mechanism.

7. The information distribution service system according to any one of claims 4-6, wherein the intelligent router is provided with a means by which in registration of an IP address and a user ID of an information distribution source and a user terminal, one of a plurality of sibling intelligent routers is specified as a master router so that when data registered at any one of the plurality of sibling intelligent routers is set up at the master router, the master router can transfer the data to the other sibling intelligent routers in a relay format in such a manner that any ones of the sibling intelligent routers may set registered data of their own sequentially.

8. The information distribution service system according to any one of claims 4-7, having such a configuration that the intelligent router, certification server, or information distribution source is mounted with an enciphering device of an elastic surface wave element configuration so that information communicated therethrough may partially or entirely undergo deflection processing by use of a defection code and deciphering processing therefor to thereby protect a routing mechanism and information to be distributed.

9. An information distribution service system which distributes information to users who have visited an Internet Web site **characterized in that** a number of users are marked such that the information reference tendency or the simple questionnaire response tendency of said visitors is continuously collected to process virtual characters out of said marked visitors on the basis of evaluation functions from consciousness models for knowing the consciousness tendency shown by said individual virtual characters as a market consciousness.

10. An information distribution service system according to claim 9, **characterized in** comprising means for correcting the consciousness tendency of said virtual characters on the basis of the consciousness tendency of the existing characters.

11. An information distribution service system according to claim 9 or claim 10, **characterized in** comprising means for correcting said evaluation functions if there is a great discrepancy between the predicted market consciousness from said virtual character and the market consciousness from an existing character.
